# EUROPÄISCHE PATENTSCHRIFT

(11) **EP 1 117 703 B1**
(45) Veröffentlichungstag und Bekanntmachung des Hinweises auf die Patenterteilung: **22.12.2004**
(21) Anmeldenummer: 99946020.7
(22) Anmeldetag: 25.08.1999
(51) Int. Cl.: C08F 6/00

(54) **VERFAHREN ZUR VERMINDERUNG DER RESTMONOMERENMENGE IN WÄSSRIGEN POLYMERDISPERSIONEN**
METHOD FOR REDUCING THE QUANTITY OF RESIDUAL MONOMERS IN AQUEOUS DISPERSIONS OF POLYMERS
PROCEDE DE REDUCTION DE LA QUANTITE DE MONOMERES RESIDUELS DANS DES DISPERSIONS AQUEUSES DE POLYMERES

(30) Priorität: 05.09.1998 DE 19840586
(43) Veröffentlichungstag der Anmeldung: 25.07.2001
(73) Patentinhaber: BASF AKTIENGESELLSCHAFT, 67056 Ludwigshafen (DE)
(72) Erfinder: WOOD, Claudia, D-69469 Weinheim (DE); BAUMSTARK, Roland, D-67434 Neustadt (DE)
(86) Internationale Anmeldenummer: PCT/EP1999/006223
(87) Internationale Veröffentlichungsnummer: WO 2000/014123

(56) Entgegenhaltungen:
- EP-A- 0 363 795
- EP-A- 0 767 180
- DE-A- 4 419 518
- DE-A- 19 741 187

## Beschreibung

Die Erfindung betrifft ein Verfahren zur Verminderung der Restmonomerenmenge in wässrigen Polymerdispersionen durch chemische Nachbehandlung mit einem speziellen Redoxinitiatorsystem.

Wässrige Polymerdispersionen enthalten nach ihrer Herstellung durch radikalische Polymerisation oder Copolymerisation neben einem Polymer-Feststoffanteil von 30 bis 75 Gew.-% aufgrund der unvollständigen Polymerisation der eingesetzten Monomeren in der radikalischen Hauptpolymerisation, die meist bis zu einem Monomerenumsatz von 95 und bevorzugt von 98 bis 99 Gew.-% geführt wird, noch einen unerwünschten Anteil an nichtpolymerisierten freien Monomeren ("Restmonomere"). Aus meist toxikologischen Gründen fordert der Markt wässrige Polymersysteme mit einem niedrigen Gehalt an Restmonomeren bei gleichbleibenden Verarbeitungs- und Anwendungseigenschaften.

Neben nichtchemischen Methoden, wie Inertgas- oder Wasserdampfstrippung, stehen unterschiedlichste chemische Methoden, wie beispielsweise in EP-B 003 957, EP-B 028 348, EP-B 563 726, EP-A 764 699, US-A 4 529 753, DE-A 37 18 520, DE-A 38 34 734, DE-A 42 32 194, DE-A 195 29 599 beschrieben, zur Absenkung von Restmonomerengehalten wässriger Polymerdispersionen zur Verfügung.

Für den Einsatz von Carbonylverbindungen bzw. deren Umsetzungsprodukten in der Nachbehandlung von wässrigen Polymerdispersionen muß von folgendem Stand der Technik ausgegangen werden.

Gemäß WO 95/33775 können zur Nachbehandlung von wässrigen Polymerdispersionen Redoxsysteme eingesetzt werden, deren Reduktionsmittel ein Addukt aus Hydrogensulfitanion und einem Keton mit 3 bis 8 C-Atomen und/oder die konjugierte Säure dieses Addukts umfaßt. Die Nachbehandlung wird in Anwesenheit von im wässrigen Medium löslichen Metallverbindungen vorgenommen.

Die EP-A 767 180 empfiehlt für die Reduktion von Restmonomerengehalten ein Redox-Initiatorsystem aus organischen Hydroperoxiden, die nicht oder nur sehr schlecht in Wasser löslich sind und u.a. Addukten aus Aldeyhyden mit einer C-Kette von 4 bis 6 C-Atomen und Bisulfiten.

Die nicht vorveröffentlichte deutsche Patentanmeldung mit dem Aktenzeichen 197 411 87.8 lehrt, zur chemischen Restmonomerenentfernung ein System aus einem Oxidationsmittel und einer organischen α-Hydroxycarbonsäure einzusetzen.

In der ebenfalls nicht vorveröffentlichten deutschen Patentanmeldung mit dem Aktenzeichen 198 391 99.4, wird der Einsatz von Oxidationsmitteln in Kombination mit einem Redoxsystem, bestehend aus einem Aldehyd und einem anorganischen Dithionit, zur Abreicherung von Restmonomeren gelehrt.

Der vorliegenden Erfindung lag die Aufgabe zugrunde, ein neues wirksames Verfahren zur Verminderung der Restmonomerenmenge in wässrigen Polymerdispersionen bereitzustellen. Außerdem soll die Verminderung der Restmonomerenmenge ohne Bildung von Mikrokoagulat erfolgen und sich leicht technisch nutzen lassen.

Es wurde nun gefunden, daß sich die Menge an Restmonomeren in wässrigen Polymerdispersionen wirksam vermindern läßt, wenn man die Nachbehandlung der Restmonomere enthaltenden wässrigen Polymerdispersionen unter Zugabe eines Redoxinitiatorensystems durchführt, das im wesentlichen
a) 0,001 bis 5 Gew.-%, bezogen auf die zur Herstellung der Polymerdispersion verwendeten Gesamtmonomerenmenge
   a₁) eines Oxidationsmittels
      R¹OOH,
      worin R¹ Wasserstoff, eine C₁- bis C₈-Alkyl- oder eine C₆- bis C₁₂-Arylgruppe bedeutet, und/oder
   a₂) einer in wässrigem Medium Wasserstoffperoxid freisetzende Verbindung, und
b) 0,005 bis 5 Gew.-%, bezogen auf die zur Herstellung der Polymerdispersion verwendeten Gesamtmonomerenmenge
   b₁) einer α-Hydroxycarbonylverbindung 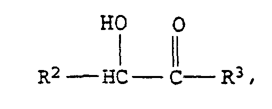 worin R² und R³ unabhängig voneinander Wasserstoff und/oder eine C₁- bis C₁₂-Alkylgruppe bedeuten, die funktionelle Gruppen enthalten und/oder olefinisch ungesättigt sein kann, R² und R³ optional durch Methylengruppen eine Ringstruktur ausbilden, die funktionelle Gruppen enthalten und/oder olefinisch ungesättigt sein kann, und/oder
   b₂) einer in wässrigem Medium solche α-Hydroxycarbonylverbindungen freisetzende Verbindung, und
c) vorteilhaft katalytische Mengen eines mehrwertigen Metallions, das in mehreren Wertigkeitsstufen auftreten kann
umfaßt.

Das Oxidationsmittel des Redox-Initiatorsystems soll in der Lage sein, Radikale zu bilden. Im Redoxsystem wird bevorzugt Wasserstoffperoxid als Oxidationsmittel eingesetzt, aber auch Kaliumperoxid, Natriumperoxid, Natriumperborat sowie weitere in wässrigem Medium Wasserstoffperoxid bildende Vorstufen. Ferner können beispielsweise auch Ammonium-, Kalium- oder Natriumpersulfat, Peroxydischwefelsäure und deren Salze, Ammonium-, Kalium- oder Natriumperphosphat oder -diperphosphat, Kaliumpermanganat und andere Salze von Persäuren eingesetzt werden. Prinzipiell ebenfalls geeignet sind organische Hydroperoxide, wie beispielsweise tert.-Butylhydroperoxid und Cumolhydroperoxid. Es ist jedoch auch möglich, Gemische verschiedener, oben genannter Oxidationsmittel einzusetzen.

Die Menge an zugesetztem Oxidationsmittel liegt im Bereich von 0,001 bis 5, bevorzugt bei 0,002 bis 3, besonders bevorzugt bei 0,003 bis 2, ganz besonders bevorzugt bei 0,01 bis 1,5 und vorzugsweise bei 0,02 bis 1 Gew.-%, bezogen auf die Gesamtmonomerenmenge.

Als Reduktionsmittel sind aliphatische α-Hydroxycarbonylverbindungen, wie aliphatische α-Hydroxyaldehyde und/oder aliphatische α-Hydroxyketone, deren Isomeren und/oder mit funktionellen Gruppen substituierten und/oder olefinisch ungesättigten Verbindungen und Gemische davon, sowie Vorstufen, die in wässriger Lösung diese α-Hydroxycarbonylverbindungen freisetzen, wie beispielsweise Acetale und Mercaptale, geeignet. Für α-Hydroxycarbonylverbindungen beispielhaft genannt seien Glykolaldehyd und/oder dessen Dimeres 2,5-Dihydroxy-1,4-dioxan, Phenylglykolaldehyd, 2-Hydroxy-3-phenylpropionaldehyd, Glycerinaldehyd und dessen höhere homologen Verbindungen, wie Aldotetrosen, Aldopentosen und Aldohexosen, sowie α-Hydroxyaceton, α,α'-Dihydroxyaceton, 1-Hydroxybutanon-2, 1-Hydroxypentanon-2,1-Hydroxyhexanon-2, 3-Hydroxybutanon-2 (Acetoin), 4-Hydroxyhept-2-enon-5, 2-Hydroxypentanon-3, 3-Hydroxypentanon-2, 3-Hydroxyheptanon-4, 4-Hydroxy-heptanon-3, 4-Hydroxy-2,2-dimethylpentanon-3, 3-Hydroxy-2,2-dimethylpentanon-4, 2-Hydroxy-1-phenylpropanon-1, 1-Hydroxy-1-phenylpropanon-2, 1-Hydroxy-1-phenylbutanon-2, 2-Hydroxy-1-phenylbutanon-1, 2-Hydroxy-1,2-diphenylethanon (Benzoin), 2-Hydroxy-1-phenylpentandion-1,4, 1-Hydroxy-1-phenylpentandion-2,4, aber auch cyclische α-Hydroxyketone, wie 2-Hydroxycyclohexanon (Adipoin) und 2-Hydroxycyclopentanon (Glutaroin). Bevorzugt werden α-Hydroxyaceton, α,α'-Dihydroxyaceton, 1-Hydroxybutanon-2, 1-Hydroxypentanon-2 und/oder 3-Hydroxybutanon-2 (Acetoin), besonders bevorzugt jedoch α-Hydroxyaceton und/oder α,α'-Dihydroxyaceton eingesetzt.

Die Menge an zugesetztem Reduktionsmittel liegt im Bereich von 0,005 bis 5 bevorzugt bei 0,01 bis 3, besonders bevorzugt bei 0,03 bis 2 und ganz besonders bevorzugt bei 0,05 bis 1 Gew.-%, bezogen auf die Gesamtmonomerenmenge. Auch höhere Mengen an Reduktionsmittel sind möglich, in der Regel aber wirtschaftlich nicht sinnvoll.

Die für die Nachbehandlung vorteilhaften Metallverbindungen sind üblicherweise vollständig im wässrigen Medium der Polymerdispersion löslich, und deren metallische Komponente darüber hinaus in der Lage, in mehreren Wertigkeitsstufen vorliegen zu können. Die gelösten Metallionen wirken katalytisch und unterstützen die Elektronenübertragungsreaktionen zwischen den eigentlich wirksamen Oxidations- und Reduktionsmitteln. Als gelöste Metallionen kommen prinzipiell Eisen-, Kupfer-, Mangan-, Vanadin-, Nickel-, Cobalt-, Titan-, Cer- oder Chromionen in Betracht. Selbstverständlich ist es auch möglich, Gemische verschiedener, sich nicht störender Metallionen, wie beispielsweise das System Fe^{2/3+} / VSO₄⁻, zu verwenden. Bevorzugt werden Eisenionen eingesetzt.

Die gelösten Metallionen werden in katalytischen Mengen, üblicherweise im Bereich bis 1000, bevorzugt 5 bis 500 und besonders bevorzugt 10 bis 100 ppm, bezogen auf die Gesamtmonomerenmasse verwendet.

Die Komponenten des erfindungsgemäß verwendeten Initiatorsystems werden zweckmäßigerweise zur Nachbehandlung der auf ca. 50 bis 130, bevorzugt 60 bis 120 und besonders bevorzugt auf 80 bis 100°C erhitzten Polymerdispersion bevorzugt bei Normaldruck, gegebenenfalls aber auch bei einem Druck von größer oder kleiner 1 bar (absolut), unter Rühren allmählich gleichzeitig oder nacheinander zudosiert, wobei im letzten Fall bevorzugt zuerst das Oxidationsmittel zugesetzt wird. Besonders günstig ist das gleichzeitige Zudosieren von Oxidations- und Reduktionsmittel über zwei separate Zuläufe. Dabei kann die Zugabe der Initiatorkomponenten beispielsweise von oben, unten oder durch die Seite des Reaktors erfolgen. Bevorzugt wird das Initiatorsystem jedoch von unten dosiert. Da die optimale Dauer der Initiatorzudosierung u.a. von der Monomerenzusammensetzung, der Größe des Reaktionsansatzes und der Reaktorgeometrie abhängig ist, ist es zweckmäßig, diese in Vorversuchen zu ermitteln. Abhängig von der gestellten Aufgabe, kann die Dauer der Initiatorzugabe wenige Sekunden bis mehrere Stunden betragen. Besonders günstig ist es, wenn die in katalytischen Mengen eingesetzte Metallverbindung der Polymerdispersion vor der Zugabe des Oxidations- und Reduktionsmittels zugesetzt wird.

Die Nachbehandlung wird üblicherweise bei einem pH-Wert ≤ 10 durchgeführt. Zur pH-Einstellung der Polymerdispersion können prinzipiell Basen, wie beispielsweise Natronlauge, Ammoniakwasser oder Triethanolamin verwendet werden. Für die Nachbehandlung der Polymerdispersion ist ein pH-Bereich von ≥ 2 und ≤ 10 günstig, bevorzugt ist jedoch ein pH-Bereich zwischen ≥ 6 und ≤ 8. Bei der pH-Einstellung mit Basen könnten jedoch die katalysierenden Metallionen in schwerlösliche Hydroxide oder Hydroxo-Komplexe überführt werden. Zur Sicherstellung ausreichender Metallionen-Konzentrationen während der Nachbehandlung ist daher der Zusatz von Komplexiermitteln, wie beispielsweise Ethylendiamintetraessigsäure, Nitrilotriessigsäure und Diethylentriaminpentaessigsäure und/oder deren jeweilige Natriumsalze und/oder die Verwendung von stabilen Metallionenkomplexen, wie beispielsweise Eisen-(III)/Natrium-Ethylendiamintetraacetat von besonderem Vorteil.

Das erfindungsgemäße Verfahren eignet sich besonders zur Verminderung der Restmonomerenmenge in wässrigen Polymerdispersionen, die durch radikalische Emulsionspolymerisation von wenigstens eine ethylenisch ungesättigte Gruppe aufweisenden Monomeren erhältlich sind.

Als wenigstens eine monoethylenisch ungesättigte Gruppe aufweisende Monomere kommen für das erfindungsgemäße Verfahren u.a. insbesondere in einfacher Weise radikalisch polymerisierbare Monomere in Betracht, wie beispielsweise die Olefine Ethylen, vinylaromatische Monomere, wie Styrol, o-Methylstyrol, o-Chlorstyrol oder Vinyltoluole, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, - iso-butyl und -2-ethylhexylester, Maleinsäuredimethylester oder Maleinsäure-di-n-butylester, Nitrile α,β-monoethylenisch ungesättigter Carbonsäuren, wie Acrylnitril sowie C₄₋₈-konjugierte Diene, wie 1,3-Butadien und Isopren. Die genannten Monomere bilden im Fall von ausschließlich nach der Methode der radikalischen wässrigen Emulsionspolymerisation erzeugten wässrigen Polymerisatdispersionen in der Regel die Hauptmonomeren, die, bezogen auf die Gesamtmenge der nach dem Verfahren der radikalischen wässrigen Emulsionspolymerisation zu polymerisierenden Monomeren normalerweise einen Anteil von mehr als 50 Gew.-% auf sich vereinen. In aller Regel weisen diese Monomeren in Wasser bei Normalbedingungen (25 °C, 1 atm) lediglich eine mäßige bis geringe Löslichkeit auf.

Monomere, die unter den vorgenannten Bedingungen eine erhöhte Wasserlöslichkeit aufweisen, sind beispielsweise α,β-monoethylenisch ungesättigte Mono- und Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon.

Im Fall von ausschließlich nach der Methode der radikalischen wässrigen Emulsionspolymerisation erzeugten wässrigen Polymerisatdispersionen werden die vorgenannten, eine erhöhte Wasserlöslichkeit aufweisenden Monomeren im Normalfall lediglich als modifizierende Monomere in Mengen, bezogen auf die Gesamtmenge der zu polymerisierenden Monomeren, von weniger als 50 Gew.-%, in der Regel 0,5 bis 20 und vorzugsweise 1 bis 10 Gew.-% einpolymerisiert.

Monomere, die üblicherweise die innere Festigkeit der Verfilmungen der wässrigen Polymerisatdispersionen erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren, unter denen das N-Methylolacrylamid und das N-Methylolmethacrylamid ganz besonders bevorzugt sind sowie deren Ester mit 1 bis 4 C-Atomen aufweisenden Alkanolen. Daneben kommen auch zwei Vinylreste aufweisende Monomere, zwei Vinylidenreste aufweisende Monomere sowie zwei Alkenylreste aufweisende Monomere in Betracht. Besonders vorteilhaft sind dabei die Di-Ester zweiwertiger Alkohole mit α,β-monoethylenisch ungesättigten Monocarbonsäuren, unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylate sowie Divinylbenzol, Vinylmethacrylat, Vinylacrylat, Allylmethacrylat, Allylacrylat, Diallymaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure-C₁-C₈-Hydroxyalkylester, wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Die vorgenannten Monomeren werden im Fall von ausschließlich nach der Methode der radikalischen wässrigen Emulsionspolymerisation erzeugten wässrigen Polymerisatdispersionen, bezogen auf die Gesamtmenge der zu polymerisierenden Monomeren, meist in Mengen von 0,5 bis 10 Gew.-% einpolymerisiert.

Die Herstellung wässriger Polymerdispersionen ist vielfach vorbeschrieben und dem Fachmann daher hinreichend bekannt [vgl. z.B. Encyclopedia of Polymer Science and Engineering, Vol. 8, S. 659ff (1987); D.C. Blackley, in High Polymer Latices, Vol. 1, S. 35ff (1966); Emulsion Polymerisation, Interscience Publishers, New York (1965) und Dispersionen synthetischer Hochpolymerer, F. Hölscher, Springer-Verlag, Berlin (1969)]. Sie erfolgt durch Emulsionspolymerisation von wenigstens eine olefinisch ungesättigte Gruppe aufweisenden Monomeren in Gegenwart eines bevorzugt wasserlöslichen Polymerisationsinitiators sowie in Gegenwart von Emulgatoren und ggf. Schutzkolloiden und üblichen weiteren Zusatzstoffen. In der Regel erfolgt hierbei der Zusatz der Monomeren durch kontinuierlichen Zulauf. Als Initiator ist die Verwendung von Peroxodischwefelsäure und/oder deren Salzen in Mengen von 0,1 bis 2 Gew.-%, bezogen auf die Gesamtmenge der Monomeren, bevorzugt. Die Polymerisationstemperatur beträgt im allgemeinen 20 bis 150 und bevorzugt 60 bis 120°C. Die Polymerisation findet ggf. unter Druck statt. Als Emulgatoren werden insbesondere anionische Emulgatoren allein oder im Gemisch mit nichtionischen Dispergiermitteln in einer Menge von insbesondere 0,5 bis 6 Gew.-% der Gesamtmonomerenmenge eingesetzt.

Die erfindungsgemäße Nachbehandlung der wässrigen Polymerdispersion zur Verminderung der Restmonomerenmenge erfolgt insbesondere, nachdem die Gesamtmonomerenmenge in der radikalischen Emulsionspolymerisation zu mindestens 95 und bevorzugt jedoch zu mindestens 98 bis 99 Gew.-% umgesetzt wurde. Die Verhältnisse bei der Hauptpolymerisation und bei der Nachbehandlung sind im allgemeinen verschieden. So erfolgt während der Hauptpolymerisation bei hoher Konzentration an Monomeren und wachsenden und somit immer hydrophober werdenden Oligomerradikalen der Radikaleintritt in die Dispersionspartikel leicht, während dieser bei der Nachbehandlung generell aufgrund der geringen Monomerkonzentration und mangels wachsender Oligomerradikale sehr schwierig verläuft. Bei der Herstellung von wässrigen Polymerdispersionen sind daher in der Regel für die Hauptpolymerisation und die Nachbehandlung unterschiedliche Initiatorensysteme erforderlich.

Wie die Verfahren der radikalischen Polymerisation generell, erfolgt auch das erfindungsgemäße Verfahren in der Regel unter Inertgasatmosphäre (z.B. N₂, Ar).

Selbstverständlich ist es möglich, die nachbehandelten wässrigen Polymerdispersionen einer Inertgas- und/oder Wasserdampfstrippung zuzuführen.

Die erfindungsgemäß einzusetzenden radikalischen Redoxinitiatorsysteme ermöglichen eine wirksame Restmonomerenabsenkung in relativ kurzer Zeit. Ferner ist von Bedeutung, daß das erfindungsgemäß beanspruchte Reduktionsmittel in der Regel wässrigen Polymerdispersionen als Konservierungsmittel zuzusetzende Microcide in vorteilhafter Weise nicht zu reduzieren vermag, weshalb eine Anwendung desselben im Überschuß die diesbezügliche Qualität der wässrigen Polymerdispersion nicht mindert.

### Beispiele

### Beispiel 1:

Eine Styrol/n-Butylacrylat-Dispersion, durch radikalische Polymerisation aus 23 kg Styrol, 25 kg n-Butylacrylat, 2 kg Acrylsäure, 1,2 kg Styrol-Saatlatex-Dispersion (34 Gew.-%ig in Wasser, Teilchengröße ca. 30 bis 35 nm), 300 g Natriumlaurylsulfat-Lösung (15 Gew.-%ig in Wasser), 500 g Dowfax® 2A1-Lösung (Dodecylphenoxybenzoldisulfonsäurenatriumsalz, 45 Gew.-%ig in Wasser), 300 g Natriumhydroxyd-Lösung (25 Gew.-%ig in Wasser), 150 g Natriumperoxodisulfat und 46 kg Wasser bei 80°C hergestellt, wies einen Feststoffgehalt von 52 Gew.-% und einen pH-Wert von 4,3 auf. Die Dispersion enthielt 8404 ppm n-Butylacrylat, 1172 ppm Styrol und 2900 ppm Acrylsäure.

In der Nachbehandlung erhitzte man 1350 g dieser, mit 25 Gew.-%iger wässriger Natriumhydroxyd-Lösung auf einen pH-Wert von 6,5 eingestellten wässrigen Polymerdispersion auf 85°C und setzte 0,02 g Natrium/Eisen-EDTA-Komplex zu. Unter Rühren wurden anschließend gleichzeitig
a) 30 g einer 1,2 Gew.-%igen wässrigen Wasserstoffperoxid-Lösung
   und
b) 30 g einer 2,35 Gew.-%igen wässrigen α,α'-Dihydxoxyaceton-Lösung
   in zwei getrennten Zuläufen mit einer Zulaufgeschwindigkeit von jeweils 30 g pro Stunde eindosiert. Die dabei resultierenden n-Butylacrylat- und Styrol-Restmengen wurden gaschromatographisch, die Acrylsäure-Restmengen mittels HPLC bestimmt. Die in der Nachbehandlung erhaltenen Ergebnisse sind in Tabelle 1 dargestellt.

**Tabelle 1:**

| Restmonomerenmengen der wässrigen Polymerdispersion in der Nachbehandlung | | | |
|---|---|---|---|
| Zeit Min | Styrol ppm | n-Butylacrylat ppm | Acrylsäure ppm |
| 0 | 1172 | 8404 | 2900 |
| 60 | 170 | 4229 | |
| 120 | 54 | 2438 | |
| 240 | 46 | 2079 | 900 |

### Beispiel 2:

Eine Styrol/n-Butylacrylat-Dispersion, durch radikalische Polymerisation aus 23 kg Styrol, 25 kg n-Butylacrylat, 2 kg Acrylsäure, 1,2 kg Styrol-Saatlatex-Dispersion (34 Gew.-%ig in Wasser, Teilchengröße ca. 30 bis 35 nm), 300 g Natriumlaurylsulfat-Lösung (15 Gew.-%ig in Wasser), 500 g Dowfax® 2A1-Lösung (Dodecylphenoxybenzoldisulfonsäurenatriumsalz, 45 Gew.-%ig in Wasser), 300 g Natriumhydroxyd-Lösung (25 Gew.-%ig in Wasser), 150 g Natriumperoxodisulfat und 46 kg Wasser bei 80°C hergestellt, wies einen Feststoffgehalt von 52 Gew.-% und einen pH-Wert von 4,3 auf.

1298 g dieser Dispersion setzte man 52 g destilliertes Wasser zu, so daß eine Dispersion mit einem Feststoffgehalt von 50 Gew.-% resultierte. Die auf 50 Gew.-% verdünnte und mit 25 Gew.-%iger wässriger Natriumhydroxyd-Lösung auf einen pH-Wert von 7,0 eingestellte Dispersion enthielt 5785 ppm n-Butylacrylat, 393 ppm Styrol und 1800 ppm Acrylsäure. In der Nachbehandlung erhitzte man diese wässrige Polymerdispersion auf 85°C und setzte 0,034 g Natrium/Eisen-EDTA-Komplex zu. Unter Rühren wurden anschließend gleichzeitig
a) 30 g einer 11,3 Gew.-%igen wässrigen Wasserstoffperoxid-Lösung
und
b) 30 g einer 11,3 Gew.-%igen wässrigen α-Hydroxyaceton-Lösung
in zwei getrennten Zuläufen mit einer Zulaufgeschwindigkeit von jeweils 10 g pro Stunde eindosiert. Die dabei resultierenden n-Butylacrylat- und Styrol-Restmengen wurden gaschromatographisch, die Acrylsäure-Restmengen mittels HPLC bestimmt. Die in der Nachbehandlung erhaltenen Ergebnisse sind in Tabelle 2 dargestellt.

**Tabelle 2:**

| Restmonomerenmengen der wässrigen Polymerdispersion in der Nachbehandlung | | | |
|---|---|---|---|
| Zeit Min | Styrol ppm | n-Butylacrylat ppm | Acrylsäure ppm |
| 0 | 393 | 5785 | 1800 |
| 60 | 163 | 4094 | |
| 120 | 42 | 1771 | |
| 240 | 36 | 116 | 90 |

### Beispiel 3:

Eine Styrol/Butadien-Dispersion wurde durch radikalische Polymerisation aus 6 kg Styrol, 8,4 kg 1,3-Butadien, 3,6 kg Acrylsäure, 0,41 kg Styrol-Saatlatex-Dispersion (34 Gew.-% in Wasser, Teilchengröße ca. 30 bis 35 nm), 135 g Texapon® NSO-Lösung (Natriumlaurylethersulfat mit durchschnittlich 2,5 Ethylenoxideinheiten; 28 Gew.-%ig in Wasser), 150 g Natriumhydroxyd-Lösung (10 Gew.-%ig in Wasser), 110 g Nariumperoxodisulfat und 18,28 kg Wasser bei 82°C hergestellt. Überschüssiges 1,3-Butadien entfernte man, indem man der auf 68°C abgekühlten Dispersion unter Rühren 2 bar Stickstoff aufpresste, entspannte und einen leichten Unterdruck (750 mbar absolut) anlegte und diesen Vorgang automatisiert ca. 1500-mal wiederholte. Nach 4 Stunden wurde eine Dispersion erhalten, die einen Feststoffgehalt von 51,3 Gew.-%, einen pH-Wert von 4,8 und Restmonomerengehalte von 1669 ppm Styrol und 280 ppm Acrylsäure aufwies.

In der Nachbehandlung erhitzte man 1350 g dieser wässrigen Polymerdispersion auf 85°C und setzte 0,02 g Natrium/Eisen-EDTA-Komplex zu. Unter Rühren wurden anschließend gleichzeitig
a) 30 g einer 1,2 Gew.-%igen wässrigen Wasserstoffperoxid-Lösung
   und
b) 30 g einer 2,3 Gew.-%igen wässrigen α,α'-Dihydroxyaceton-Lösung
   in zwei getrennten Zuläufen mit einer Zulaufgeschwindigkeit von jeweils 10 g pro Stunde eindosiert. Die dabei resultierenden Styrol-Restmengen wurden gaschromatographisch und die Acrylsäure-Restmengen mittels HPLC bestimmt. Die in der Nachbehandlung erhaltenen Ergebnisse sind in Tabelle 3 dargestellt.

**Tabelle 3:**

| Restmonomerenmengen der wässrigen Polymerdispersion in der Nachbehandlung | | |
|---|---|---|
| Zeit Min | Styrol ppm | Acrylsäure ppm |
| 0 | 1669 | 280 |
| 60 | 906 | |
| 120 | 545 | |
| 180 | 383 | 20 |

## Patentansprüche

1. Verfahren zur Verminderung der Restmonomerenmenge in wässrigen Polymerdispersionen durch Nachbehandlung mit einem Initiatorsystem, **dadurch gekennzeichnet, daß** man die Nachbehandlung in der wässrigen Polymerdispersion unter Zugabe eines Initiatorensystems durchführt, das im wesentlichen
a) 0,001 bis 5 Gew.-%, bezogen auf die zur Herstellung der Polymerdispersion verwendeten Gesamtmonomerenmenge
a₁) eines Oxidationsmittels
R¹OOH,
worin R¹ Wasserstoff, eine C₁- bis C₈-Alkyl- oder eine C₆bis C₁₂-Arylgruppe bedeutet, und/oder
a₂) einer in wässrigem Medium Wasserstoffperoxid freisetzende Verbindung, und
b) 0,005 bis 5 Gew.-%, bezogen auf die zur Herstellung der Polymerdispersion verwendeten Gesamtmonomerenmenge
b₁) einer α-Hydroxycarbonylverbindung 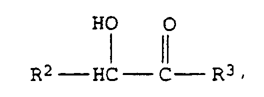 worin R² und R³ unabhängig voneinander Wasserstoff und/oder eine C₁- bis C₁₂-Alkylgruppe bedeuten, die funktionelle Gruppen enthalten und/oder olefinisch ungesättigt sein kann, R² und R³ optional durch Methylengruppen eine Ringstruktur ausbilden, die funktionelle Gruppen enthalten und/oder olefinisch ungesättigt sein kann, und/oder
b₂) einer in wässrigem Medium solche α-Hydroxycarbonylverbindungen freisetzende Verbindung, und
c) vorteilhaft katalytische Mengen eines mehrwertigen Metallions, das in mehreren Wertigkeitsstufen auftreten kann
umfaßt.

2. Verfahren nach Anspruch 1, **dadurch gekennzeichnet, daß** das Oxidationsmittel eine anorganische Verbindung ist.

3. Verfahren nach Anspruch 1, **dadurch gekennzeichnet, daß** das Oxidationsmittel Wasserstoffperoxid ist.

4. Verfahren nach Anspruch 1, **dadurch gekennzeichnet, daß** R² Wasserstoff und R³ eine Methylgruppe sind.

5. Verfahren nach Anspruch 1, **dadurch gekennzeichnet, daß** R² Wasserstoff und R³ eine Hydroxymethylgruppe sind.

6. Verfahren nach Anspruch 1, **dadurch gekennzeichnet, daß** R² und R³ je eine Methylgruppe sind.

7. Verfahren nach Anspruch 1, **dadurch gekennzeichnet, daß** man das Oxidationsmittel und das Reduktionsmittel der Polymerdispersion während der Nachbehandlung gleichzeitig in separaten Zuläufen zuführt.

8. Verfahren nach Anspruch 1, **dadurch gekennzeichnet, daß** man die Metallionen der Polymerdispersion in der Nachbehandlung vor dem Oxidations- und Reduktionsmittel zusetzt.

9. Verfahren nach Anspruch 1, **dadurch gekennzeichnet, daß** man als mehrwertiges Metallion Eisenionen einsetzt.

10. Verfahren nach Anspruch 1, **dadurch gekennzeichnet, daß** man die Eisenionen in komplexierter Form zusetzt.

11. Verfahren nach Anspruch 1, **dadurch gekennzeichnet, daß** die Temperatur der Polymerdispersion während der Nachbehandlung 50 bis 130°C beträgt.

12. Verfahren nach Anspruch 1, **dadurch gekennzeichnet, daß** man die Nachbehandlung im Überdruck, bei Normaldruck (1 bar absolut) oder im Unterdruck durchführt.

13. Verfahren nach Anspruch 1, **dadurch gekennzeichnet, daß** der pH-Wert der Polymerdispersion während der Nachbehandlung ≥ 2 und ≤ 10 ist.

## Claims

1. A process for reducing the amount of residual monomer in aqueous polymer dispersions by aftertreatment with an initiator system, which comprises said aftertreatment in the aqueous polymer dispersion being accompanied by the addition of an initiator system essentially comprising
a) from 0.001 to 5% by weight, based on the total monomer amount used to prepare the polymer dispersion,
a₁) of an oxidizing agent
R¹OOH,
where R¹ is hydrogen or a C₁-C₈-alkyl or a C₆-C₁₂-aryl group, and/or
a₂) of a compound which in aqueous medium releases hydrogen peroxide, and
b) from 0.005 to 5% by weight, based on the total monomer amount used to prepare the polymer dispersion,
b₁) of an α-hydroxycarbonyl compound 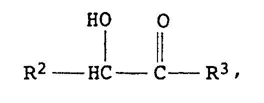 where R² and R³ independently of one another are hydrogen and/or a C₁-C₁₂-alkyl group which may contain functional groups and/or may be olefinically unsaturated, or R² and R³ optionally, by way of methylene groups, form a ring structure which may contain functional groups and/or may be olefinically unsaturated, and/or
b₂) of a compound which in aqueous medium releases such α-hydroxycarbonyl compounds, and
c) advantageously, catalytic amounts of a polyvalent metal ion which is able to exist in a plurality of valence states.

2. A process as claimed in claim 1, wherein the oxidizing agent is an inorganic compound.

3. A process as claimed in claim 1, wherein the oxidizing agent is a hydrogen peroxide.

4. A process as claimed in claim 1, wherein R² is hydrogen and R³ is a methyl group.

5. A process as claimed in claim 1, wherein R² is hydrogen and R³ is a hydroxymethyl group.

6. A process as claimed in claim 1, wherein R² and R³ are each a methyl group.

7. A process as claimed in claim 1, wherein the oxidizing agent and the reducing agent are supplied simultaneously in separate feed streams to the polymer dispersion during the aftertreatment.

8. A process as claimed in claim 1, wherein the metal ions are added to the polymer dispersion in the aftertreatment prior to the oxidizing and reducing agent.

9. A process as claimed in claim 1, wherein iron ions are employed as polyvalent metal ion.

10. A process as claimed in claim 1, wherein the iron ions are added in complexed form.

11. A process as claimed in claim 1, wherein the temperature of the polymer dispersion during the aftertreatment is from 50 to 130°C.

12. A process as claimed in claim 1, wherein the aftertreatment is conducted at superatmospheric pressure, at atmospheric pressure (1 bar absolute) or at subatmospheric pressure.

13. A process as claimed in claim 1, wherein the pH of the polymer dispersion during the aftertreatment is ≥ 2 and ≤ 10.

## Revendications

1. Procédé de diminution de la quantité en monomères résiduels dans des dispersions aqueuses de polymère par traitement ultérieur avec un système d'initiateur, **caractérisé en ce que** l'on réalise le traitement ultérieur dans la dispersion aqueuse de polymère en additionnant un système d'initiateur, qui comprend essentiellement
a) 0,001 à 5% en poids, sur base de la quantité totale en monomères utilisée pour la préparation de la dispersion polymère, de
a1) un agent d'oxydation
R¹OOH,
où R1 représente hydrogène, un radical alkyle en C1 à C8 ou aryle en C6 à C12, et/ou
a2) un composé libérant du peroxyde d'hydrogène en milieu aqueux, et
b) 0,005 à 5% en poids, sur base de la quantité totale en monomères utilisée pour la préparation de la dispersion polymère, de
b1) un composé α-hydroxycarbonylé 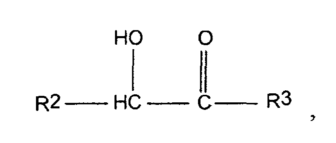 où R² et R³ représentent indépendamment l'un de l'autre, hydrogène, un radical alkyle en C₁ à C₁₂, qui peut contenir un radical fonctionnel et/ou être oléfiniquement insaturé, R² et R³ forment une structure cyclique, le cas échéant par des radicaux méthylène, qui peut contenir un radical fonctionnel et/ou être oléfiniquement insaturée, et/ou
b2) un composé libérant un tel composé α-hydroxycarbonylé en milieu aqueux, et
c) de manière avantageuse, des quantités catalytiques d'un ion métallique polyvalent, qui peut se présenter sous différents états de valence.

2. Procédé selon la revendication 1, **caractérisé en ce que** l'agent d'oxydation est un composé inorganique.

3. Procédé selon la revendication 1, **caractérisé en ce que** l'agent d'oxydation est le peroxyde d'hydrogène.

4. Procédé selon la revendication 1, **caractérisé en ce que** R² est hydrogène et R³ est un radical méthyle.

5. Procédé selon la revendication 1, **caractérisé en ce que** R² est hydrogène et R³ est un radical hydroxyméthyle.

6. Procédé selon la revendication 1, **caractérisé en ce que** R² et R³ sont chacun un radical méthyle.

7. Procédé selon la revendication 1, **caractérisé en ce que** l'on amène l'agent d'oxydation et l'agent de réduction à la dispersion polymère pendant le traitement ultérieur, simultanément, dans des conduites séparées.

8. Procédé selon la revendication 1, **caractérisé en ce que** l'on ajoute les ions métalliques à la dispersion polymère dans le traitement ultérieur, avant les agents d'oxydation et de réduction.

9. Procédé selon la revendication 1, **caractérisé en ce que** l'on met en oeuvre des ions fer comme ion métallique polyvalent.

10. Procédé selon la revendication 1, **caractérisé en ce que** l'on ajoute les ions fer sous forme complexée.

11. Procédé selon la revendication 1, **caractérisé en ce que** la température de la dispersion polymère se situe dans l'intervalle allant de 50 à 130°C pendant le traitement ultérieur.

12. Procédé selon la revendication 1, **caractérisé en ce que** l'on réalise le traitement ultérieur en surpression, sous pression normale (1 bar absolu) ou en dépression.

13. Procédé selon la revendication 1, **caractérisé en ce que** le pH de la dispersion polymère est ≥ 2 et ≤ 10 pendant le traitement ultérieur.
